(19) Europäisches Patentamt
European Patent Office
Office européen des brevets

(11) **EP 4 397 378 A1**

(12) **EUROPEAN PATENT APPLICATION**

(43) Date of publication:
**10.07.2024 Bulletin 2024/28**

(21) Application number: **24150211.1**

(22) Date of filing: **03.01.2024**

(51) International Patent Classification (IPC):
**A62C 3/00** (2006.01)   **A62C 4/04** (2006.01)
**F24C 15/20** (2006.01)   **B01D 45/08** (2006.01)

(52) Cooperative Patent Classification (CPC):
**A62C 4/04; A62C 3/006; F24C 15/20;** B01D 45/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.01.2023 US 202363436764 P**

(71) Applicant: **Oy Halton Group Ltd.**
**Helsinki 00520 (FI)**

(72) Inventors:
• **DELPORTE, Nicolas**
  **Racquighem (FR)**
• **MOUMEN, Kamal**
  **Sainte-Catherine (FR)**

(74) Representative: **Viering, Jentschura & Partner mbB**
**Patent- und Rechtsanwälte**
**Am Brauhaus 8**
**01099 Dresden (DE)**

(54) **AEROSOL SEPARATOR**

(57)   An air purifier for an exhaust system includes a grease filter assembly with a housing enclosing multiple baffle chambers each having an air inlet that connects to a baffle cavity that extends along an entire length of the baffle chamber and terminates with outlet openings at two opposite sides of the housing. At least one fire blocker is positioned at least at one side of the two opposite sides of the housing, such that exhaust air that has flowed into said each baffle chamber through its respective inlet opening flows out an outlet opening of said each baffle chamber and subsequently through the fire blocker before exiting the air purifier into the exhaust system. The fire blocker may have various shapes and effects heat exchange with the exhaust fumes to suppress or prevent flames from passing through.

Fig. 1

## Description

Cross-Reference to Related Applications

None

Background

An air purifier can be used to reduce, filter, and eliminate grease, pollutants, and solid particles from exhaust air in air venting systems of an institutional bar, grill room and restaurant kitchens or equivalent spaces. In some instances, a fire may be occasionally present under the air purifier, and flames could be pulled into the air purifier by exhaust air flow. It is desirable for the air purifier to reduce or prevent the spread of fire downstream of the air purifier. An air purifier that removes grease from exhaust air is described in U.S. Patent No. 4,872,892, which is incorporated herein in its entirety.

Some air purifiers, especially when used in a commercial setting, are required to pass various industry tests and comply with industry standards. EN 16282-6 is one such standard that dictates performance of air purifiers relative to fire penetration through the air purifier. This standard applies to aerosol separators installed in professional kitchens, associated areas and other food processing facilities intended for professional/commercial use. Part 6 of the standard specifically deals with aerosol separators and specifies testing to verify compliance with fire penetration standards.

The air purifier is tested at a test bench that should allow exhaust air flow variation between 70 and 1500 m³/hr. A gas-fired surface burner is positioned 50 cm below the air purifier and generates a flame with a minimum height of 80 cm, so the flame come into contact with the air purifier, while exhaust air urges the flames into the air purifier.

Summary

One or more embodiments of the disclosure include an air purifier that complies with the EN 16282-6 fire penetration standard, while still maintaining low pressure drop across the air purifier. A low pressure drop is desirable to reduce energy use of the exhaust fan that pulls air through the air purifier. Other embodiments include methods of reducing fire penetration, using air purifiers, methods of manufacturing fire blocking elements of air purifiers, and methods of enhancing the fire blocking properties of existing air purifiers.

Objects and advantages of embodiments of the disclosed subject matter will become apparent from the following description when considered in conjunction with the accompanying drawings.

Brief Description of the Drawings

Embodiments will hereinafter be described in detail below with reference to the accompanying drawings, wherein like reference numerals represent like elements. The accompanying drawings have not necessarily been drawn to scale. Some of the figures may have been simplified by the omission of selected features for the purpose of more clearly showing other underlying features. Such omissions of elements in some figures are not necessarily indicative of the presence or absence of particular elements in any of the exemplary embodiments, except as may be explicitly disclosed in the corresponding written description.

Fig. 1 illustrates a perspective view of a fire blocking air purifier according to embodiments of the disclosed subject matter.
Fig. 2A illustrates an exploded in view of the fire blocking air purifier of Fig 1.
Fig. 2B illustrates a front face of the view of the fire blocking air purifier of Fig. 1.
Fig. 2C illustrates a cross-section of the fire blocking air purifier as shown in Fig. 2B.
Fig. 2D illustrates a portion of a schematic representation of air flow inside of baffles of the fire blocking air purifier according to embodiments of the disclosed subject matter.
Fig. 2E illustrates a perspective view of the fire blocking air purifier and a schematic representation of air flow according to embodiments of the disclosed subject matter.
Fig. 3 illustrates a fire blocker according to embodiments of the disclosed subject matter.
Fig. 4 illustrates a portion of the fire blocker of Fig. 3.
Fig. 5A illustrates an example of a fire control region with perforations according to embodiments of the disclosed subject matter.
Fig. 5B illustrates an enlarged region of Fig. 5A.
Fig. 5C illustrates another example of perforation spacing according to embodiments of the disclosed subject matter.
Fig. 6 illustrates an example of a fire control region with perforations according to embodiments of the disclosed subject matter.
Fig. 7A illustrates another example of a fire control region with perforations according to embodiments of the disclosed subject matter.
Fig. 7B illustrates an enlarged region of Fig. 7A.
Fig. 8 illustrates an example of a fire control region with a mesh screen according to embodiments of the disclosed subject matter.
Figs. 9A-9F illustrate examples of fire blockers according to embodiments of the disclosed subject matter.
Figs. 10A-10D illustrate examples of cross-sectional dimensions of walls of fire blockers according to embodiments of the disclosure.
Figs. 11A-11C illustrate examples of cross-sectional dimensions of walls of fire blockers according to embodiments of the disclosure.

Fig. 12 illustrates an example of the fire blocking air purifier in use with an exhaust hood according to embodiments of the disclosed subject matter.

Detailed Description

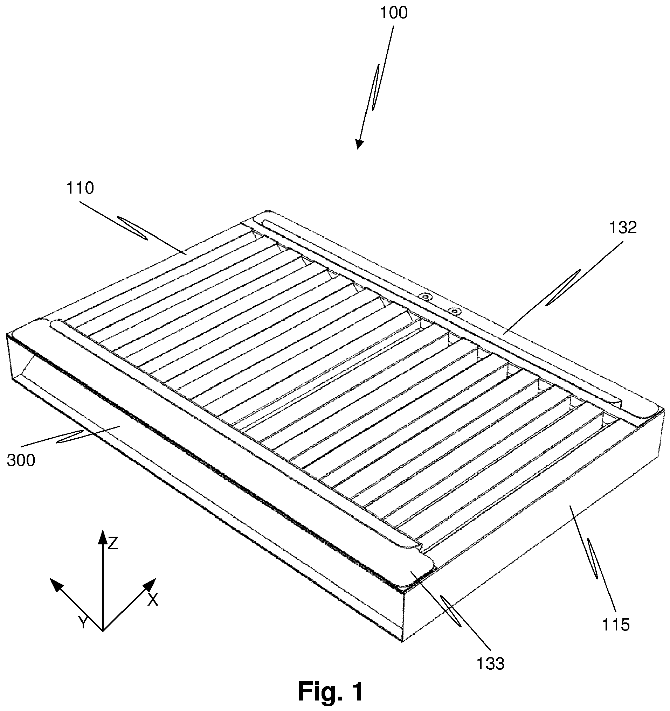

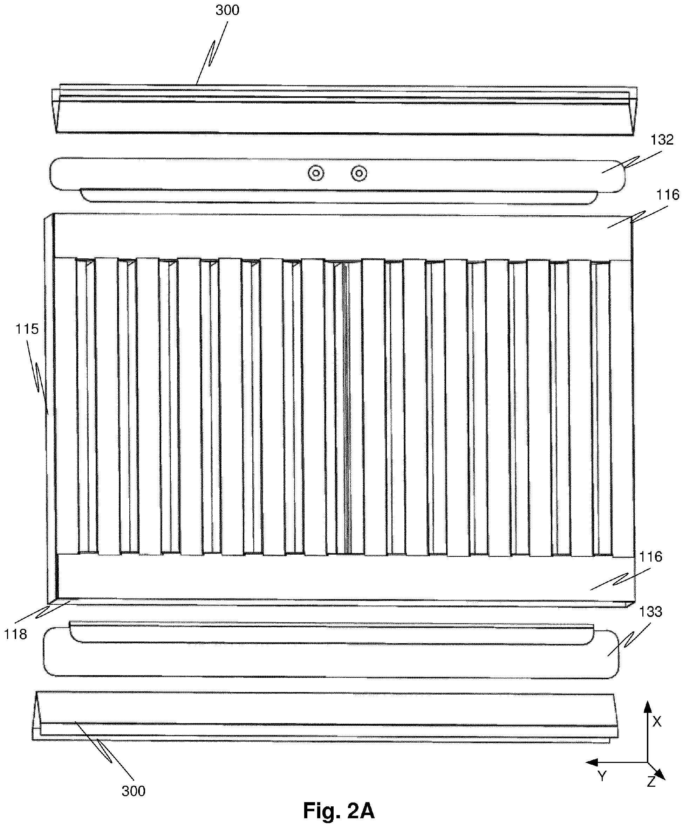

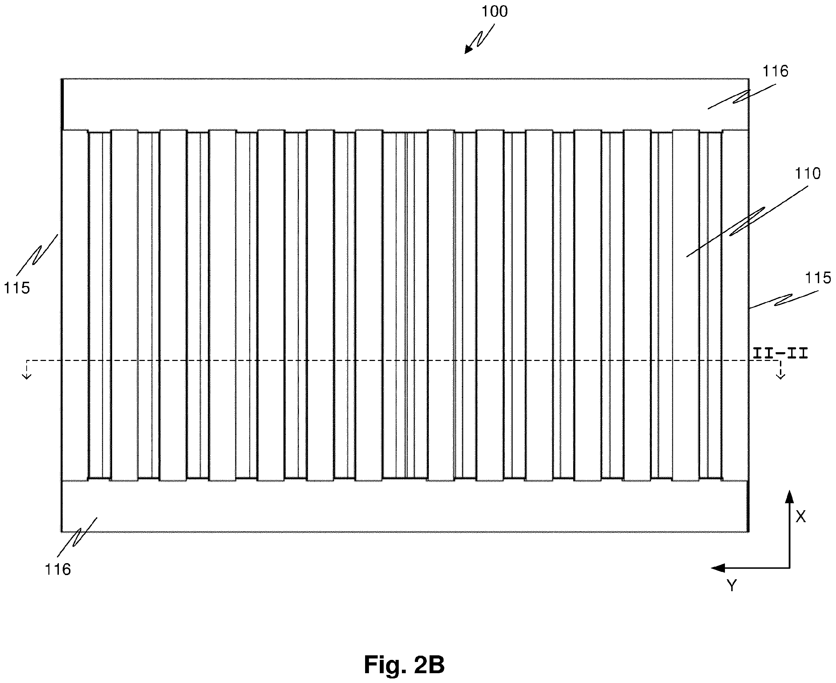

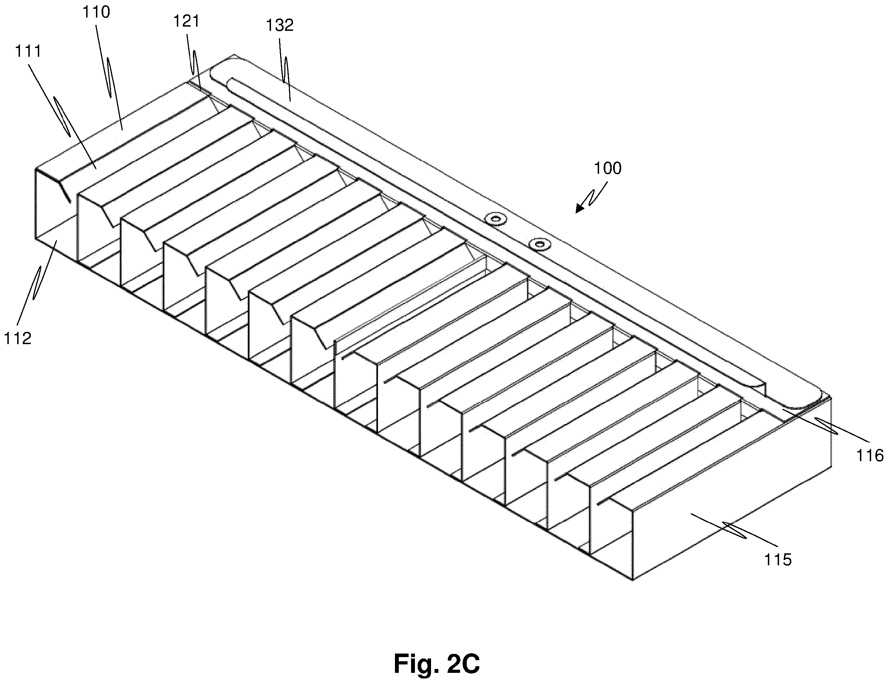

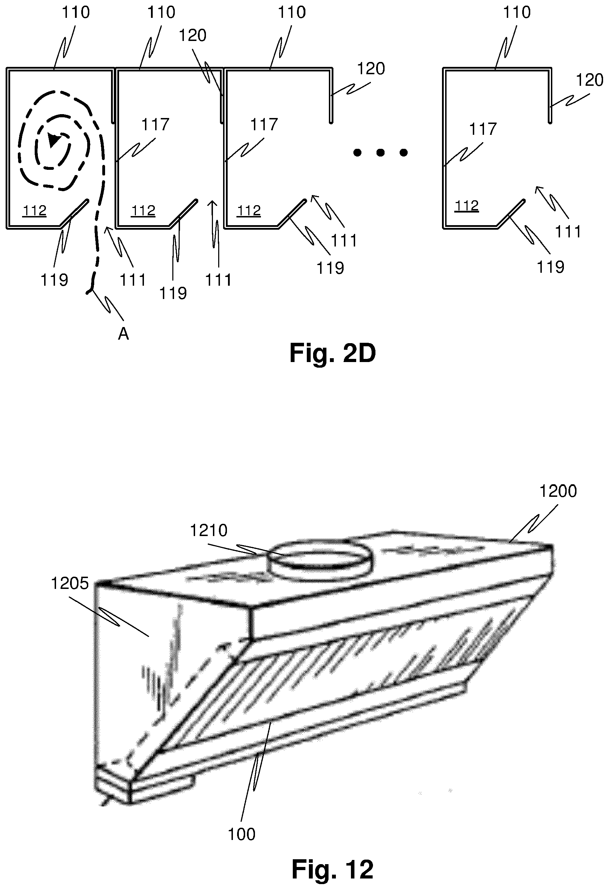

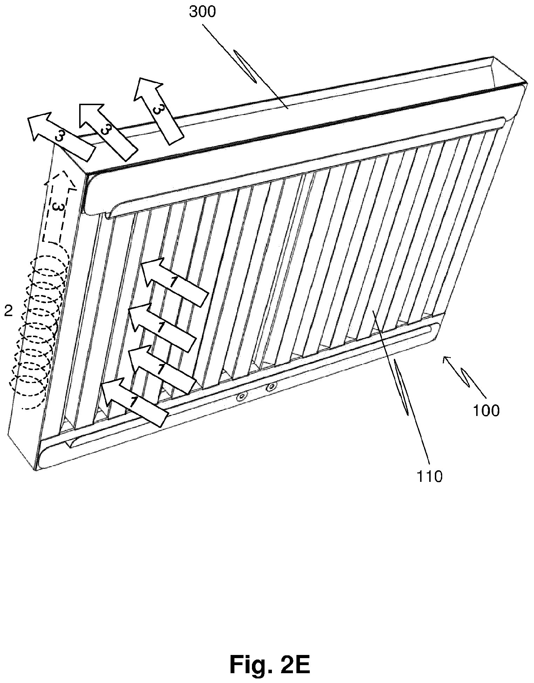

Referring to Fig. 1, an embodiment of a fire blocking grease filter, also referred to as a fire blocking air purifier, 100 is shown. Reference axes X, Y, and Z are shown in the figure and in most of the other figures to provide a frame of reference. Fig. 1 illustrates this embodiment in perspective view, and it will be understood that the orientation as shown can be changed when the filter is in use. The filter has a housing which is made up of the perimeter portions shown in the figure. Side walls 115 are connected by front walls 116 (not shown in Fig. 1, as shown in Fig. 2). A rear wall, which is not shown, may be provided or may be omitted and formed from portions of baffles 110. Fig. 2E shows a cross section detail of the baffles, and it can be seen from the figure that the top wall (as shown in Fig. 2E) can form the rear wall of the fire blocking filter 100.

A first mounting plate 132 and a second mounting plate 133 may be provided as shown in Fig. 1. These plates can be attached to the front walls 116 in various known ways, such as welding, adhesive, screws, rivets, etc. These attachment plates have grooves which can face in a common direction such that the whole filter 100 can be slid into positioned along those grooves, or can be moved into positioned in a direction perpendicular to the grooves.

The fire blocking grease filter 100 includes a plurality of baffles 110. The baffles as shown in Fig. 1 extend in the X direction. Details of the baffles will be described further below, but as shown in Fig. 1 the baffles are arranged adjacent to each other to create a unitary structure. At the ends of unitary structure, the front wall 116 along with the sidewall 115 and the rear wall form a cavity 118 into which the baffles fluidly connect. Thus, airflow through the baffles will ultimately pass through this cavity. As will be further described below, air enters the baffles along the Z-direction, the direction of flow is diverted, or changed such that it spirals inside the baffles, but overall proceeds in the X-direction. Ultimately, the airflow reaches the cavity 118 and encounters a fire blocker 300. A fire blocker 300 is provided in the cavity 118. The details of various embodiments of fire blockers are described further below.

Turning next to Fig. 2A, an exploded diagram of the fire blocking grease filter 100 is shown, to better illustrate the relationships of the components described above. In this figure, the front walls 116 are clearly shown as surrounding the cavity 118. The first mounting plate 132 and the second mounting plate 133 are removed to expose the underlying structure. The fire blockers 300 are shown as generally the V-shaped structures which can be made from a folded piece of material such as sheet metal.

Although not shown in Fig. 2A, the fire blockers 300 are designed to allow air to flow through them such that the pressure drop across the fire blocker 300 is minimized as much as possible.

Referring to Fig. 2B, a frontal view of the fire blocking grease filter 100 is shown, with mounting plate 132 and 133 removed for clarity. A dashed line marked with II-II indicates where a cross-section view is taken, as shown in Fig. 2C. In this particular embodiment, there are fourteen baffles (110) arranged side-by-side to form the filter. However, it will be understood that in other embodiments, fewer or more baffles may be provided.

Fig. 2C shows a cross-sectional view of a portion of Fig. 2B. Here, air inlet opening 111 is shown as the space between front faces of adjacent baffles 110. As can be seen in the figure, the air inlet opening 111 is fluidly connected to a baffle cavity 112. The baffle cavity 112 is at least partially bounded by walls of its respective baffle 110. The baffle cavity 112 extends toward cavity 118 which runs along the end of the fire blocking grease filter 100. In Fig. 2C, cavity 118 is underneath mounting plate 132.

Fig. 2D illustrates an example of operation of the grease filter 100. The filter 100 is composed of separate baffles 110. When viewed from cross section, each baffle has a wall 117 which separates a baffle from the adjacent baffle.

As further seen in Fig. 2D, air flow A is caused to rotate in separate baffle cavities 112 without change of the direction of rotation. As a result, a highly efficient separation effect is obtained with relatively low air flow velocities, the degree of separation of particles over 5 $\mu$m being about 95% and that of particles over 2.5 $\mu$m still about 50%.

One of the advantages of the present design is the modularity of the filter, such that multiple baffles 110 can be combined to create filters 100 of varying sizes. The structure the baffle 110 includes beak-like parts 119 and 120. The beak-like part 119 of the structure of baffle 110 provides an air inlet opening 111 into the baffle. The air inlet opening 111 is a slit of a size less than about 10 mm, so that most efficient separation possible might be obtained. The size of the flow slit is advantageously in the range of about 3-8 mm. In an embodiment, the size is 5.6 mm. In the air purifier 100, the helical motion through the baffle cavities 112 may be made such that air emerges from the air purifier both from top and from bottom.

Fig. 2E is a perspective view of the air purifier 100, illustrating in greater detail how air flow (arrow labeled 1) enters through air inlet openings 111. Arrows labeled "1" represent grease laden exhaust fumes arriving at the air purifier 100. The grease laden exhaust fumes enter the air purifier 100 through inlets 111.

The air flow is then caused to turn in a helical fashion, as represented by the spiral labeled "2". Grease particles are extracted as the exhaust air travels along the filter walls. The air flow can travel up and down (relative to the reference of the figure) toward a cavity 118 at each end of the air filter 100. Once the air flow reaches the cavities 118, it encounters fire blocker 300 and passes through the fire blocker 300, as indicated by arrows labeled "3" in the figure. When the airflow reaches the fire blocker 300, the direction of the airflow will, in general, change due to the fire blocker 300.

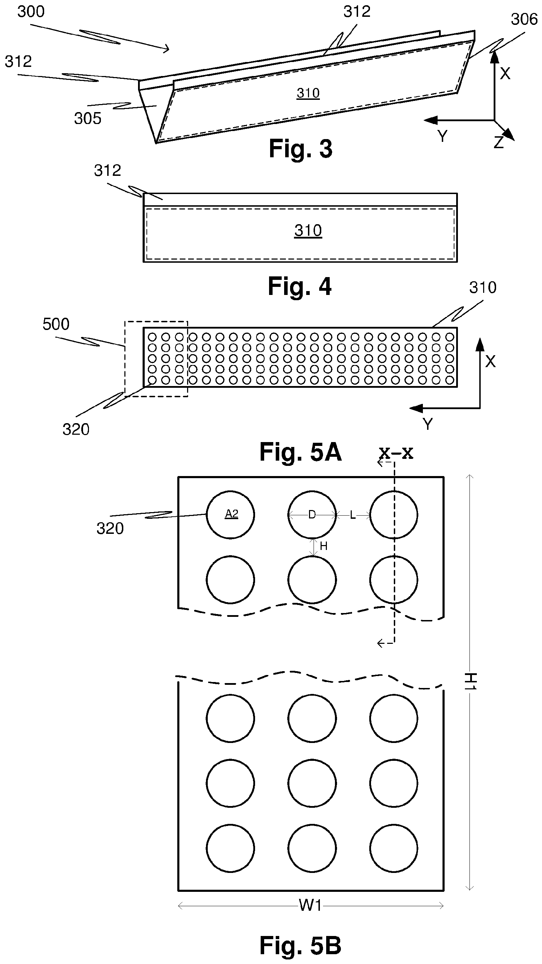

In embodiments, the fire blocker 300 is formed of a V-shape plate structure, as shown in greater detail in Fig. 3. The airflow that reaches cavity 118 will first encounter the peak of the V-shaped structure, and thereafter flow along the first wall 305 and the second wall 306. This V-shaped structure, by virtue of its peak, deflects the airflow along the surfaces. Each surface has a fire control region 310, which has some manner of perforations that allow air to flow through the fire control region. Air flow through the fire control region 310 will again change in a direction of the airflow, while also accomplishing heat exchange with the material of the fire blocker. In a general sense, it is desirable to maximize heat exchange, so that flame heat energy is absorbed into the fire blocker. This can be accomplished by increasing the mass of the material from which the fire blocker is made, such as the thickness of the metal panels. It is also possible to increase heat exchange by increasing the surface area of the fire blocker with which the airflow interacts. In embodiments, this is accomplished by reducing the opening area of the perforations and/or increasing the length of the perforation tunnels (e.g., providing holes that are not drilled perpendicular to a surface, but rather at an angle so a tunnel through the fire blocker material is longer than a perpendicularly drilled tunnel)). Furthermore, it is desirable to maximize total air flow through the fire blocker and thereby to minimize pressure drop across the fire blocker. Thus, when the fire blocker is added into the grease filter, the combined fire blocking grease filter 100 will have minimal pressure drop across the entire filter while having a maximum heat exchange with air that passes through the fire blocking filter and thereby prevent flames from propagating beyond the filter.

Fig. 4 illustrates one wall of the fire blocker 300. Here, the first wall 305 and the second wall 306 are represented as a flat sheet of material. In embodiments, the material is stainless steel. As shown in Fig. 4, the plate has a fire control region designated as 310 and also a tab 312. In embodiments, it is possible that the fire control region 310 will extend through the tab 312 such that the entire plate will have the fire control region on it. This may make manufacturing easier, as a plate can be e.g. perforated in one operation, and later tab 312 can be bent to create a shape which is shown in Fig. 3. Alternatively, only the fire control region 310 shown in Fig. 4 might have perforations in it and tab 312 can be left without any perforations. Tab 312 can be used to fasten the fire blocker 300 inside of cavity 118. For example, the tab may provide friction fit such that fire blocker 300 is inserted into the cavity with tab 312 pressing against the walls of the cavity, holding fire blocker in place. In other embodiments, tab 312 can be welded or otherwise mechanically attached to the walls of cavity 118. It should be noted that the V-shape creates a natural spring which will be easy to manufacture and be effective to hold fire blocker 300 in place without any complicated attachments.

Fig. 5A, illustrates fire control region 310 with a plurality of perforations which may be circular, as shown. Multiple perforations 320 are shown in this example. A region 500 enclosed with dashed lines is shown as enlarged in Fig. 5B.

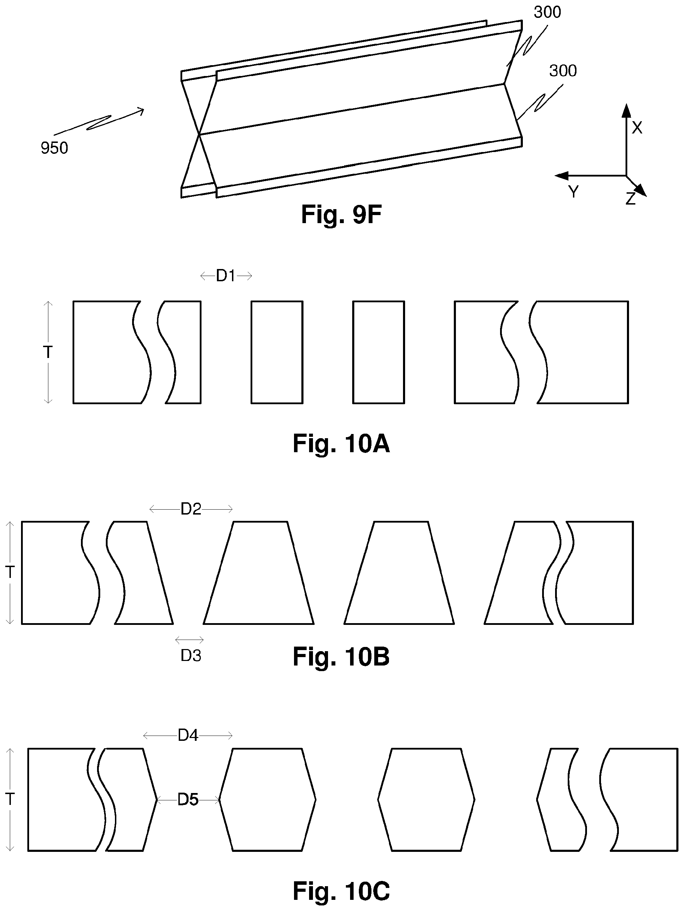

As shown in Fig. 5B, each perforation 320 can be circle with diameter D. The area of each perforation 320 is designated as A2. A dashed line designated as X-X represents a cross-sectional view which is shown in Figs. 10A-C and discussed further below. Adjacent circles are spaced from each other a distance of L in the horizontal direction (along the Y axis in Fig. 5A) and a distance of H in the vertical direction (along the X axis in Fig. 5A). The height of the whole fire control region 310 is designated as H1 and its width is designated as W1. Thus, the open area resulting from the perforations 320 in the fire control region 310 and be represented by the equation: Open area = A2 x N, where N is the number of perforations. Further, the ratio of open area to the total area of fire control region 310 can be represented as R = A2xN/H1xW1. It is desirable for R to be greater than or equal to 33%. In embodiments, the ratio of open area is 33%. In further embodiments, the ratio of open area is 50%.

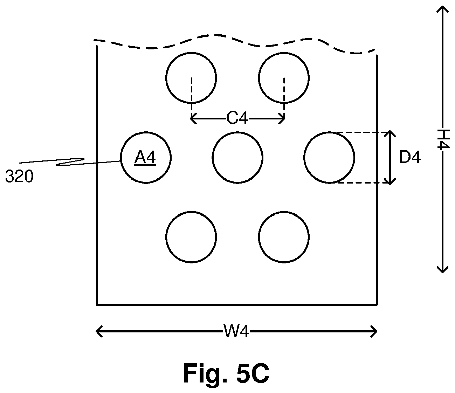

Fig. 5C illustrates an embodiment of a fire control region 310 on a fire blocker. The perforations are holes with a circular shape and a diameter D4. The centers of the holes are spaced in a hexagonal pattern, such that a hole is surrounded by six other holes at 60 degree radial spacing. The distance between the centers of two adjacent holes is C4. With this configuration, the percent open area OA can be calculated as follows:

$$OA\% = \frac{D4^2 * 90.69}{C4^2}$$

. As noted above, in embodiments the open area is 33%, which imposes a relationship between the radius and the spacing of the circular holes when the centers are staggered at 60 degrees. In embodiments the diameter D4 is 3 mm. In other embodiments, the diameter D4 is 6 mm. In other embodiments, the diameter D4 is between 2 mm and 10 mm. A configuration with D4=3mm, OA% = 33%, and thickness of the fire blocker 300 being 1.5 mm has been confirmed to satisfy the EN 16282-6 standard by preventing a flame with a minimum height of 80 cm at a location 50 cm below the air purifier from penetrating through the air purifier.

Although Fig. 5C illustrates all holes as having the same diameter, in other embodiments holes with varying diameters are provided. A mix of holes with larger and smaller diameters may provide a lower pressure drop (which is desirable for energy efficiency) and still block flames from penetrating.

From the above, it is possible to calculate the number of holes per unit of area, such as per square inch. Holes per square inch (HPSI) is equal to the OA% divided

$$HPSI = \frac{OA\%}{78.54 * D4^2}$$

by (78.54 * D4²), or          .

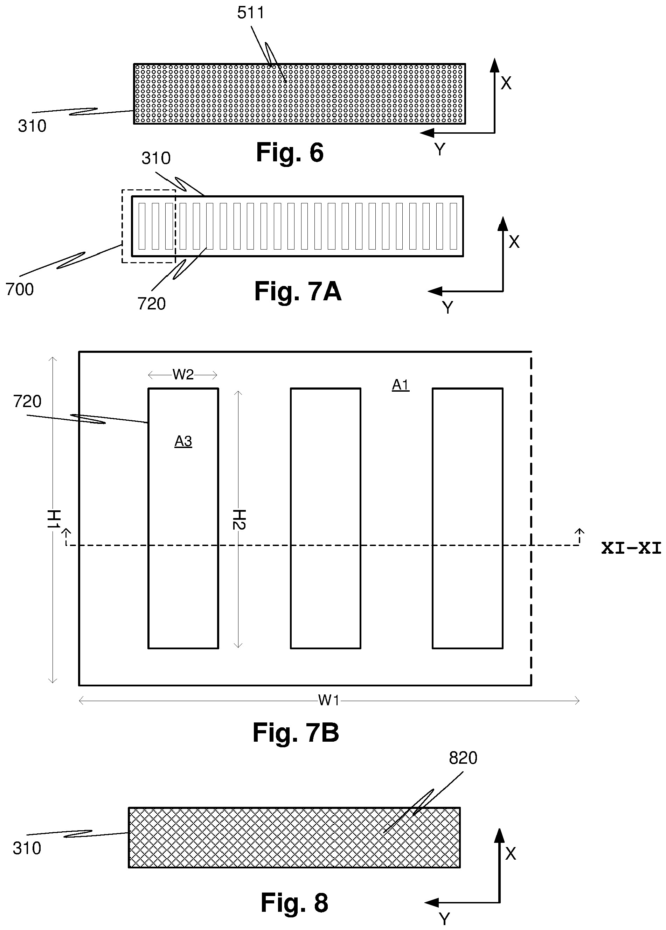

Fig. 6 illustrates another embodiment of the fire control region 310, this time with a greater density of holes 511 per unit area of the fire control region 310. This embodiment may be beneficial to affect more heat exchange while reducing pressure drop across the fire control region when air passes from one side of it to the opposite side.

Fig. 7A illustrates yet another embodiment of a fire control region 310 with perforations which take the shape of a rectangle. Rectangular holes 720 extend across the fire control region 310. As shown in this figure, each rectangular hole 720 may extend essentially from one and of the fire control region to an opposite end of the fire control region. However, in other embodiments, not shown, the rectangular openings can be oriented and distributed in a different manner. It may be beneficial to use rectangular perforations as shown, as they allow for any grease it may have passed through the baffles before encountering the fire blocker, to flow down along elongated sides of the perforations and thus avoid fouling and blocking the fire blocker. An enlarged region 700 is indicated with dashed lines Fig. 7A and reproduced in Fig. 7B.

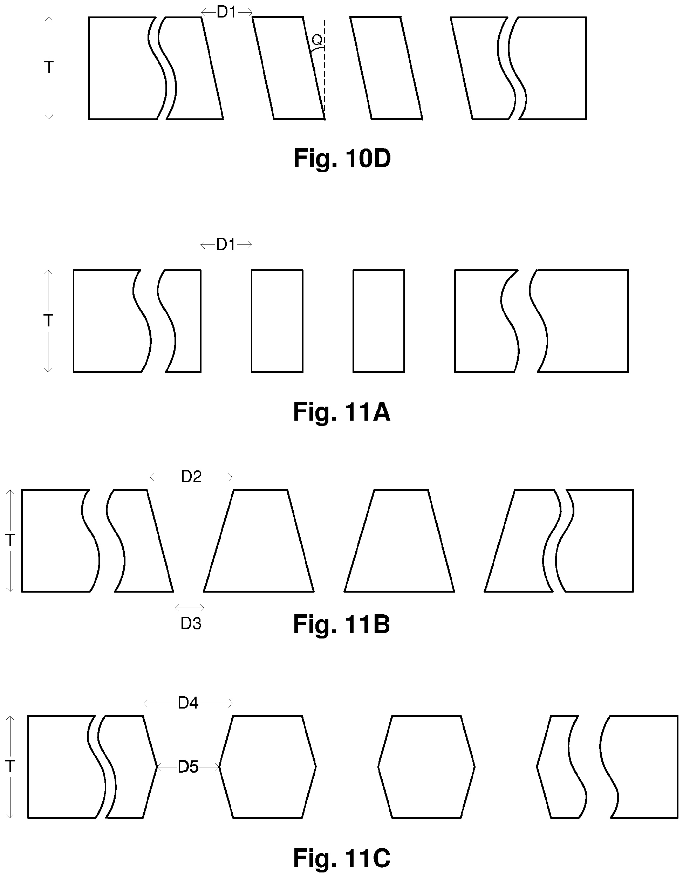

Fig. 7B illustrates an enlargement of region 700 from Fig. 7A. Each rectangular hole 720 has an open area of A3. Each rectangular hole has a width W2 and the height H2, thus area A3 is equal to W2xH2. The height of the fire control region 310 is H1 and the width is W1. Therefore, the ratio of the open area relative to the total area of the fire control region, R = H2xW2 / [H1xW1]xN, where N is the number of holes. It is desirable for this ratio to be large, to minimize pressure drop across the fire control region when air passes from one side of the fire control region to the opposite side. Dashed line indicated as XI-XI in Fig. 7B represents the line along which a cross-sectional view is taken and shown in Figs. 11A-C.

Referring to Fig. 8, yet another embodiment of the fire control region 310 is shown, this time with a frame around the perimeter of the fire control region holding a wire mesh 820. The mesh will normally have a dense structure to affect heat exchange while also allowing air to pass through with minimal pressure drop.

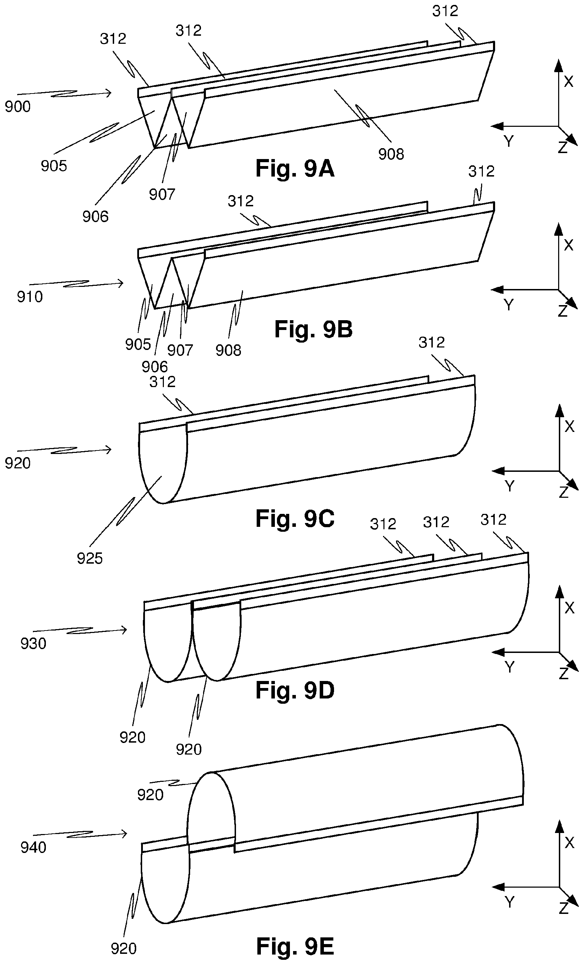

Figs. 9A-9F illustrate other embodiments of a fire blocker that can be used in conjunction with the fire blocking grease filter 100. Referring to Fig. 9A, two fire blockers 300 are joined together in the Z direction. In this embodiment, each fire blocker 300 has two tabs 312, and they are joined in the middle, thus forming a W-shape of the double fire blocker 900. This double fire blocker 900 has four walls, first wall 905, second wall 906, third wall 907, and fourth wall 908. Each of these walls may have a fire control region 310 as discussed above, with various types of perforations. In other words, the perforation designs described above are not limited only to the embodiment shown in Fig. 3, and can be used in any of the disclosed embodiments.

Fig. 9B shows double fire blocker 910 that is similar to the double fire blocker 900 described above, with the exception of the absence of tab 312 from the middle of the fire blocker. Thus, double fire blocker 910 can be manufactured from a single blank sheet of material which is bent three times form the W-shape. The sheet of material will have one or more fire control regions 310 as in the other embodiments.

Turning to Fig. 9C, U-shaped fire blocker 920 has a U-shaped cross-section as shown. This fire blocker can have a single fire control region 310 spanning the entire curved region on the single wall 925 of the fire blocker. This makes it easy to manufacture by first perforating a sheet of material (e.g., stainless steel sheet metal) with appropriate perforations, and then bending the sheet into an appropriate shape. Similar to fire blocker 300, the U-shaped fire blocker 920 will naturally act as a spring to keep the fire blocker in position in cavity 118.

Fig. 9D, shows fire blocker 940 which is a variation of the U-shaped fire blocker 920, where two such fire blockers 920 are combined together resulting in a substantially W-shape cross-section profile. Here, two fire blockers 920 can be joined together with tabs 312 pressed together and attached to create this fire blocker. Each of the individual fire blockers 920 can have a fire control region 310 as discussed above.

Fig. 9E shows fire blocker 940 which is another variation of the U-shaped fire blocker 920, but this time with two fire blockers 920 combined to create a substantially S-shaped cross section, as shown.

Fig. 9F shows another embodiment of fire blocker 950 which has an X-shaped cross section. This arrangement can be created from two (V-shaped) fire blockers 300 attached peak-to-peak, resulting in an X-shape. This particular fire blocker arrangement may provide enhanced performance in blocking plain penetration, as any flames would have to pass through not only a single fire control region 310, but through two such regions and each time changing direction of air flow and experiencing heat exchange while passing through the fire control region.

As noted above, all fire blockers will have one or more fire control regions 310 and those of the fire control regions will have some manner of perforations. The perforations may be circles, ellipses, polygons, squares, rectangles, or even a mesh. As noted in Fig. 5, the perforations may be circles. Figs. 10A-C illustrate various possible cross-sectional profile of the circles shown in Fig. 5B.

Referring to Fig. 10A, the thickness of the plate or wall in which the fire control region 310 is disposed is indicated as T. Here, whole is a circle of diameter D1 and has a uniform cross-sectional profile along the entirety of the thickness T. In embodiments, T is 1.5 mm. In other embodiments, T is 0.7 mm. The plate may be made of stainless steel. In embodiments, D1 is between 2 mm and 10 mm, such as 3 mm.

Referring to Fig. 10B, the cross-sectional profile along the thickness T of the holes does not have to be uniform. For example, the perforations can have a conical cross-section profile such that the opening on one surface has a diameter D2 and the opening at the opposite surface and has a diameter D3, wherein D2 is greater than D3. This may be advantageous to create a larger surface area along which the exhaust fumes flow and perform heat exchange thus reducing energy in any flames that may reach the fire blocker. The surface with the larger openings will face toward the potential source of flames. These types of perforations may be drilled with conical drill bits or may be punched with tapered punches from one side. The perforations may also be drilled with conventional drill bits to first arrive at a cross-sectional shape shown in Fig. 10A and subsequently enlarged with conical punches which will introduce the tapered shape.

The surface area of the region which is in contact with potential flames can be further enlarged by adopting a cross-sectional profile shown in figure 10C. Referring to Fig. 10C, the holes have an opening of a diameter D4 on both opposed surfaces of the wall and the opening papers down to a diameter of the D5, which is smaller than D4 in the middle of the hole. This results in a larger surface area on the interior of the perforation which allows better heat exchange for fumes and potential flames that reach the fire blocker. These perforations can be drilled from two sides of the fire blocker with conical drills, or may be stamped with conical punches.

Fig. 10D illustrates yet another embodiment of the cross-sectional profile of holes 320 which may be provided in fire control region 310. Here, the holes are drilled at an angle Q away from perpendicular to the surface of the fire control region 310. By drilling the holes at an angle, the path through the material of the fire control region 310 is longer than compared to a perpendicular hole, which provides a greater surface area for heat exchange without increasing the thickness of the material from which the fire blocker 300 is manufactured.

Figs. 11A-C are identical to those of Fig. 10A-C, but represent the cross sectional profiles of rectangular perforations 720 in Fig. 7B. The cross-sectional view is along the dashed line XI-XI in Fig. 7B. This line runs along the Y-direction shown in the drawings. It will be understood that the cross sectional profile of the rectangular perforations taken along a line in the X-direction can be the same as in the Y-direction, or the cross sectional profiles can be combined, such that the cross-sectional profile in the Y-direction is shown in Fig. 11A, while the cross sectional profile in the X-direction is shown in Fig. 11B. Such an arrangement would provide improved ease of manufacturing, where a cutting wheel with a tapered profile can be used to cut such perforations in a single machining operation, or a tapered punch can punch out tapered holes.

Fig. 12 illustrates an example of the fire blocking air purifier 100 in use with an exhaust hood 1200. The exhaust hood 1200 may be mounted on a wall, a support structure, or may be suspended from the ceiling. The exhaust hood 1200 is positioned such that exhaust fumes from a cooking appliance generally located below the exhaust hood will rise toward the exhaust hood inlet, which is covered by the fire blocking air purifier 100, as shown. Exhaust fumes will first pass through the fire blocking air purifier 100, and then enter plenum 1205. From the plenum 1205, the exhaust fumes will continue through the exhaust vent system, which is not illustrated, but is connected to hood outlet 1210.

According to a 1st further embodiments, there is provided an air purifier (100) for an exhaust hood (1200), the air purifier comprising: a housing (115, 116) enclosing a plurality of baffle chambers (110), each baffle chamber having an air inlet opening (111) that fluidly connects to a baffle cavity (112), the air inlet opening and the baffle cavity extending along an entire length of the baffle chamber (in the X direction in figures), the baffle chamber terminating and having outlet openings (121) at two opposite sides of the housing; at least one fire blocker (300) positioned at least at one side of the two opposite sides of the housing, such that exhaust air that has flowed into said each baffle chamber through its respective inlet opening flows out an outlet opening of said each baffle chamber and subsequently through the fire blocker (300) before exiting the air purifier into the exhaust hood (1200), wherein the inlet opening (111) of said each baffle chamber is positioned to co-operate with walls of the baffle chamber to direct air flow entering said each baffle chamber through the inlet opening (111) to proceed in a helical motion inside the baffle cavity (112) to said outlet opening (121) of the baffle chamber, such that said air flow is only in a direction substantially perpendicular to the direction in which said air flow enters through the inlet opening (111).

According to a 2nd further embodiment, there is provided the air purifier of the 1st further embodiment wherein the housing includes two side walls (115) and two front walls (116).

According to a 3rd further embodiment, there is provided the air purifier of the 1st or the 2nd further embodiment further comprising: a first mounting plate (132) and a second mounting plate (133) attached to two front walls (116) and configured to mate with a portion of the exhaust hood (1200) and hold the air purifier (100) in a fixed position when the air purifier (100) is installed in the exhaust hood (1200).

According to a 4th further embodiment, there is provided the air purifier of any of the 1st through the 3rd further embodiments, wherein each baffle cavity (112) is at least partially bounded by an adjacent baffle chamber or a by a side wall (115) of the housing.

According to a 5th further embodiment, there is provided the air purifier of any of the 1st through the 4th further embodiments, wherein the housing includes at least one cavity (118) at its end that is fluidly connected to the plurality of the baffle chambers.

According to a 6th further embodiment, there is provided the air purifier of any of the 1st through the 5th further embodiments, wherein the fire blocker (300) is positioned in said at least one cavity (118).

According to a 7th further embodiment, there is provided the air purifier of any of the 1st through the 6th further embodiments, wherein the housing includes two voids (118), each void of the two voids fluidly connected to the plurality of the baffle chambers, and the at least one fire blocker (300) includes two fire blockers (300), each of the fire blockers positioned in one of the two voids.

According to a 8th further embodiment, there is provided the air purifier of any of the 1st through the 7th further embodiments, wherein each fire blocker (300) includes a fire control region (310) that allows at least partial flow of gas from one surface of the fire blocker (300) to an opposed surface of the fire blocker (300) in the fire control region and causes heat exchange the flow of gas and the fire control region (310).

According to a 9th further embodiment, there is provided the air purifier of any of the 1st through the 8th further embodiments, wherein each fire blocker (300) includes a first wall (305) connected to a second wall (306), wherein the fire blocker has a V-shaped cross section in a plane perpendicular to the major axis of the fire blocker.

According to a 10th further embodiment, there is provided the air purifier of any of the 1st through the 9th further embodiments, wherein each fire blocker further includes a first tab (312) at an end of the first wall and a second tab (312) at an end of the second wall, and the fire control region (310) covers the first wall and the second wall, but does not cover the first tab of the second tab.

According to a 11th further embodiment, there is provided the air purifier of any of the 1st through the 10th further embodiments, wherein the fire control region includes a plurality of perforations that extend from one surface the fire control region to an opposite surface of the fire control region.

According to a 12th further embodiment, there is provided the air purifier of any of the 1st through the 11th further embodiments, wherein the fire control region includes a plurality of perforations that extend through the first wall and through the second wall in a direction that is perpendicular to a major surface of each of the first wall and the second wall.

According to a 13th further embodiment, there is provided the air purifier of any of the 1st through the 12th further embodiments, wherein the perforations are circles having a diameter D, each circle having a horizontal distance from a closest adjacent circle of L and a vertical distance from a closest adjacent circle of H, the fire control region has a width W1 and a length L1, a ratio of open area to closed area is given by R=[N((pi)(D/2)^2))]/[W1xL1], and R is greater than or 33%.

According to a 14th further embodiment, there is provided the air purifier of any of the 1st through the 13th further embodiments, wherein the diameter of each circle, D, is between 2mm and 10mm.

According to a 15th further embodiment, there is provided the air purifier of any of the 1st through the 14th further embodiments, wherein the diameter of each circle, D, is 3 mm and a thickness of the fire control region is 1.5 mm.

According to a 16th further embodiment, there is provided the air purifier of any of the 1st through the 15th further embodiments, wherein the perforations are circular perforations having a diameter D4, centers of the circular perforation are spaced in a hexagonal pattern such that a circular perforation is surrounded by six other circular perforations at 60 degree radial spacing, a distance between the centers of two adjacent circular perforations is C4, and a percent open area OA% is calculated as $OA\% = \dfrac{D4^2 * 90.69}{C4^2}$ .

According to a 17th further embodiment, there is provided the air purifier of any of the 1st through the 16th further embodiments, wherein D4 is 3 mm, OA% is 33%, and a thickness of the fire blocker is 1.5 mm.

According to a 18th further embodiment, there is provided the air purifier of any of the 1st through the 17th further embodiments, wherein D4 is 3 mm, OA% is 50%, and a thickness of the fire blocker is 0.7 mm.

According to a 19th further embodiment, there is provided the air purifier of any of the 1st through the 18th further embodiments, wherein the perforations are circles having a diameter D, each circle having a horizontal distance from a closest adjacent circle of L and a vertical distance from a closest adjacent circle of H, the fire control region has a width W1 and a length L1, a ratio of open area to closed area is given by R=[N((pi)(D/2)^2))]/[W1xL1], and R is between 33% and 50%, inclusive.

According to a 20th further embodiment, there is provided the air purifier of any of the 1st through the 19th further embodiments, wherein the diameter of each circle, D, is between 2 mm and 10 mm.

According to a 21st further embodiment, there is provided the air purifier of any of the 1st through the 20th further embodiments, wherein the first wall (305) has a thickness measured perpendicular to a major surface of the first wall of T1 between 0.3 mm and 1.5 mm, inclusive.

According to a 22nd further embodiment, there is provided the air purifier of any of the 1st through the 21st further embodiments, wherein the thickness T is 0.8 mm.

According to a 23rd further embodiment, there is provided the air purifier of any of the 1st through the 22nd further embodiments, wherein the second wall (306) has a thickness measured perpendicular to a major surface of the second wall of T2 between 0.3 mm and 1.5 mm.

According to a 24th further embodiment, there is provided the air purifier of any of the 1st through the 23rd further embodiments, wherein the thickness T2 is 0.8 mm.

According to a 25th further embodiment, there is provided the air purifier of any of the 1st through the 24th further embodiments, wherein the first wall (305) and the second wall (306) each has a thickness measured perpendicular to a major surface of the respective wall of T, between 0.3 mm and 1.5 mm.

According to a 26th further embodiment, there is provided the air purifier of any of the 1st through the 25th further embodiments, wherein a first wall (305) and a second wall (306) form an angle in a range of 120 degrees and 30 degrees.

According to a 27th further embodiment, there is provided the air purifier of any of the 1st through the 26th further embodiments, wherein the angle is 78 degrees.

According to a 28th further embodiment, there is provided the air purifier of any of the 1st through the 27th further embodiments, wherein the perforations are circles.

According to a 29th further embodiment, there is provided the air purifier of any of the 1st through the 28th further embodiments, wherein the perforations are polygons.

According to a 30th further embodiment, there is provided the air purifier of any of the 1st through the 29th further embodiments, wherein the perforations are polygons and circles combined in a single fire blocker.

According to a 31st further embodiment, there is provided the air purifier of any of the 1st through the 30th further embodiments, wherein the perforations are rectangles having a length H1 and a width W2.

According to a 32nd further embodiment, there is provided the air purifier of any of the 1st through the 31st further embodiments, wherein the perforations are rectangles having a length H1 and a width W2.

According to a 33rd further embodiment, there is provided the air purifier of any of the 1st through the 32nd further embodiments, wherein the fire blocker includes a first wall (305) connected to a second wall (306), wherein the fire blocker has a V-shaped cross section in a plane perpendicular to the major axis of the fire blocker, and the first wall and the second wall form an angle A.

According to a 34th further embodiment, there is provided the air purifier of any of the 1st through the 33rd further embodiments, wherein the angle A is between 30 degrees and 150 degrees.

According to a 35th further embodiment, there is provided the air purifier of any of the 1st through the 34th further embodiments, wherein the angle A is 78 degrees.

According to a 36th further embodiment, there is provided the air purifier of any of the 1st through the 35th further embodiments, wherein the fire blocker (950) includes four walls meeting at an intersecting line, each of the four walls having a respective fire control region (310).

According to a 37th further embodiment, there is provided the air purifier of any of the 1st through the 36th further embodiments, wherein each fire control region (310) includes perforations.

According to a 38th further embodiment, there is provided the air purifier of any of the 1st through the 37th further embodiments, wherein the fire blocker (900) includes four walls connected in series such that a cross-section of the fire blocker has a W-shape, each of the four walls including a fire control region (310) with perforations.

According to a 39th further embodiment, there is provided the air purifier of any of the 1st through the 38th further embodiments, wherein the fire blocker (900) includes a raised tab (312) extending along a top of each end wall and along a central ridge of the W-shape.

According to a 40th further embodiment, there is provided the air purifier of any of the 1st through the 39th further embodiments, wherein the fire blocker (900) is formed of two V-shaped fire blockers (300) connected to each other along their respective tabs (312) extending along a top of one of their side walls.

According to a 41st further embodiment, there is provided the air purifier of any of the 1st through the 39th further embodiments, wherein the fire blocker (910) includes two raised tabs, each extending along a top of each end wall of the W-shape.

According to a 42nd further embodiment, there is provided the air purifier of any of the 1st through the 41st further embodiments, wherein the fire blocker (910) is formed from a single piece of sheet metal that is bent, pressed, or shaped into the W-shape.

According to a 43rd further embodiment, there is provided the air purifier of any of the 1st through the 42nd further embodiments, wherein the fire blocker (920) is formed of a single sheet of material bent into a U-shaped channel with at least one fire control region (310) along a majority of surface area of the fire blocker, with perforations formed in the fire control region.

According to a 44th further embodiment, there is provided the air purifier of any of the 1st through the 43rd further embodiments, wherein the fire blocker (930) includes two U-shaped channels connected to each other, with each of the U-shaped channels having a fire control region with perforations.

According to a 45th further embodiment, there is provided the air purifier of any of the 1st through the 44th further embodiments, wherein the two U-shaped channels each open in a first direction.

According to a 46th further embodiment, there is provided the air purifier of any of the 1st through the 45th further embodiments, wherein the two U-shaped channels open in opposite directions, such that the fire blocker has a S-shaped cross-section.

According to a 47th further embodiment, there is provided the air purifier of any of the 1st through the 46th further embodiments, wherein the fire blocker (950) has an X-shaped cross-sectional shape.

According to a 48th further embodiment, there is provided the air purifier of any of the 1st through the 47th further embodiments, wherein the fire blocker (950) includes four walls, with each of the walls having a fire control region with perforations.

According to a 49th further embodiment, there is provided a method of preventing flames passing through a grease filter, the method comprising: providing a grease filter with baffle chambers that redirect incoming airflow toward ends of the baffle chambers; providing a fire blocker in a location that is downstream of the baffle chambers, the fire blocker effecting heat exchange with the airflow to prevent flames from passing beyond the fire blocker. The grease filter is an air purifier to any of the 1st through 48th further embodiments.

According to a 50th further embodiment, there is provided the method of the 49th further embodiment, wherein the providing a fire blocker includes providing two fire blockers such that each of the two fire blockers is positioned at opposite ends of the baffle chambers.

According to a 51st further embodiment, there is provided the method of any of the 49th through the 50th further embodiments, wherein each fire blocker has two walls connected at an intersection, the two walls forming a V-shaped cross section, with an apex of the V-shape pointed toward the baffle chambers.

According to a 52nd further embodiment, there is provided the method of any of the 49th through the 51st further embodiments, wherein each of the two walls includes perforations that allow the airflow to pass.

According to a 53rd further embodiment, there is provided the method of any of the 49th through the 52nd further embodiments, wherein the perforations are holes formed perpendicular to the walls thereby creating flow channels through the walls, the flow channels having a first axis, and the airflow leaving the baffle chambers has a direction of flow that is offset from the first axis such that the airflow changes flow direction when it passes through the flow channels.

According to a 54th further embodiment, there is provided the method of any of the 49th through the 53rd further embodiments, further comprising: operating an air moving mechanism to pull exhaust air into the grease filter; extracting grease from the exhaust air before the exhaust air enters the fire blocker; and flowing the exhaust air through the fire blocker.

According to a 55th further embodiment, there is provided a method of reducing fire penetration through a grease filter of an exhaust hood above a cooking appliance, the method comprising: removing a first grease filter, that lacks a fire blocker, which includes a housing (115, 116) enclosing a plurality of first baffle chambers (110), each first baffle chamber having an air inlet opening (111) that fluidly connects to a baffle cavity (112), the baffle opening and the baffle cavity extending along an entire length of the baffle chamber (in the X direction in figures) from an exhaust hood above the cooking appliance; and installing a second grease filter which includes a second housing (115, 116) enclosing a plurality of second baffle chambers (110), each second baffle chamber being shorter along its longest dimension than each of the first baffle chambers and having a second air inlet opening (111) that fluidly connects to a second baffle cavity (112), the second air inlet opening and the baffle cavity extending along an entire length of the second baffle chamber (in the X direction in figures), the second baffle chamber terminating and having outlet openings (121) at two opposite sides of the housing; and at least one fire blocker (300) positioned at least at one side of the two opposite sides of the housing, such that exhaust air that has flowed into said each baffle chamber through its respective inlet opening flows out an outlet opening of said each baffle chamber and subsequently through the fire blocker before exiting the second grease filter into the exhaust hood.

It should be apparent that all of the embodiments of the lights, return grilles, and HVAC systems can be combined to produce further embodiments. Many alternatives, modifications, and variations are enabled by the present disclosure. Features of the disclosed embodiments can be combined, rearranged, omitted, etc., within the scope of the invention to produce additional embodiments. Furthermore, certain features may sometimes be used to advantage without a corresponding use of other features. Accordingly, Applicants intend to embrace all such alternatives, modifications, equivalents, and variations that are within the spirit and scope of the present disclosure.

For example, further embodiments of the invention are as follows:

According to a 1st further embodiment, there is provided an air purifier (100) for an exhaust hood (1200), the air purifier comprising: a housing (115, 116) enclosing a plurality of baffle chambers (110), each baffle chamber having an air inlet opening (111) that fluidly connects to a baffle cavity (112), the air inlet opening and the baffle cavity extending along an entire length of the baffle chamber, the baffle chamber terminating and having outlet openings (121) at two opposite sides of the housing; at least one fire blocker (300) positioned at least at one side of the two opposite sides of the housing, such that exhaust air that has flowed into said each baffle chamber through its respective inlet opening flows out an outlet opening of said each baffle chamber and subsequently through the fire blocker (300) before exiting the air purifier into the exhaust hood (1200), wherein the inlet opening (111) of said each baffle chamber is positioned to cooperate with walls of the baffle chamber to direct air flow entering said each baffle chamber through the inlet opening (111) to proceed in a helical motion inside the baffle cavity (112) to said outlet opening (121) of the baffle chamber, such that said air flow is only in a direction substantially perpendicular to the direction in which said air flow enters through the inlet opening (111).

According to a 2nd further embodiment, there is provided the air purifier (100) according to the 1st further embodiment, wherein the housing includes two side walls (115) and two front walls (116).

According to a 3rd further embodiment, there is provided the air purifier (100) according to 1st or 2nd further embodiment, further comprising: a first mounting plate (132) and a second mounting plate (133) attached to two front walls (116) and configured to mate with a portion of the exhaust hood (1200) and hold the air purifier (100) in a fixed position when the air purifier (100) is installed in the exhaust hood (1200).

According to a 4th further embodiment, there is provided the air purifier according to anyone of the 1st to 3rd further embodiments, wherein each baffle cavity (112) is at least partially bounded by an adjacent baffle chamber or a by a side wall (115) of the housing.

According to a 5th further embodiment, there is provided the air purifier according to anyone of the 1st to 4th further embodiments, wherein the housing includes at least one cavity (118) at its end that is fluidly connected to the plurality of the baffle chambers.

According to a 6th further embodiment, there is provided the air purifier according to the 5th further embodiment, wherein the fire blocker (300) is positioned in said at least one cavity (118).

According to a 7th further embodiment, there is provided the air purifier according to anyone of the 1st to 6th further embodiments, wherein the housing includes two voids (118), each void of the two voids fluidly connected to the plurality of the baffle chambers, and the at least one fire blocker (300) includes two fire blockers (300), each of the fire blockers positioned in one of the two voids.

According to an 8th further embodiment, there is provided the air purifier according to anyone of 1st to 7th further embodiments, wherein each fire blocker (300) includes a fire control region (310) that allows at least partial flow of gas from one surface of the fire blocker (300) to an opposed surface of the fire blocker (300) in the fire control region and causes heat exchange the flow of gas and the fire control region (310).

According to a 9th further embodiment, there is provided the air purifier according to anyone of the 1 st to 8th further embodiments, wherein each fire blocker (300) includes a first wall (305) connected to a second wall (306), wherein the fire blocker has a V-shaped cross section in a plane perpendicular to the major axis of the fire blocker.

According to a 10th further embodiment, there is provided the air purifier according to the 9th further embodiment, wherein each fire blocker further includes a first tab (312) at an end of the first wall and a second tab (312) at an end of the second wall, and the fire control region (310) covers the first wall and the second wall, but does not cover the first tab of the second tab.

According to an 11th further embodiment, there is provided the air purifier according to the 8th further embodiment or according to the 9th or 10th further embodiment provided that in combination with the 8th further embodiment, wherein the fire control region includes a plurality of perforations that extend from one surface the fire control region to an opposite surface of the fire control region.

According to a 12th further embodiment, there is provided the air purifier according to the 9th or 10th further embodiment, wherein the fire control region includes a plurality of perforations that extend through the first wall and through the second wall in a direction that is perpendicular to a major surface of each of the first wall and the second wall.

According to a 13th further embodiment, there is provided the air purifier according to the 11th or 12th further embodiment, wherein the perforation are circles having a diameter D, each circle having a horizontal distance from a closest adjacent circle of L and a vertical distance from a closest adjacent circle of H, the fire control region as a width W1 and a length L1, a ratio of open area to closed area is given by $R=[N((pi)(D/2)^2)]/[W1 \times L1]$, and R is greater than or 33%.

According to a 14th further embodiment, there is provided the air purifier according to the 13th further embodiment, wherein the diameter of each circle, D, is between 2mm and 10mm.

According to 15th further embodiment, there is provided the air purifier according to the 13th or 14th further embodiment, wherein the diameter of each circle, D, is 3 mm and a thickness of the fire control region is 1.5 mm.

According to a 16th further embodiment, there is provided the air purifier according to 11th or 12th further embodiment, wherein the perforations are circular perforations having a diameter D4, centers of the circular perforation are spaced in a hexagonal pattern such that a circular perforation is surrounded by six other circular perforations at 60 degree radial spacing, a distance between the centers of two adjacent circular perforations is C4, and a percent open area OA% is calculated as

$$OA\% = \frac{D4^2 * 90.69}{C4^2}.$$

According to a 17th further embodiment, there is provided the air purifier according to the 16th further embodiment, wherein D4 is 3 mm, OA% is 33%, and a thickness of the fire blocker is 1.5 mm.

According to an 18th further embodiment, there is provided the air purifier according to the 16th or 17th further embodiment, wherein D4 is 3 mm, OA% is 50%, and a thickness of the fire blocker is 0.7 mm.

According to a 19th further embodiment, there is provided the air purifier according to the 11th or 12th further embodiment, wherein the perforations are circles having a diameter D, each circle having a horizontal distance from a closest adjacent circle of L and a vertical distance from a closest adjacent circle of H, the fire control region has a width W1 and a length L1, a ratio of open area to closed area is given by $R=[N((pi)(D/2)^2)]/[W1xL1]$, and R is between 33% and 50%, inclusive.

According to a 20th further embodiment, there is provided the air purifier according to the 19th further embodiment, wherein the diameter of each circle, D, is between 2 mm and 10 mm.

According to a 21st further embodiment, there is provided the air purifier according to the 20th further embodiment, wherein the first wall (305) has a thickness measured perpendicular to a major surface of the first wall of T1 between 0.3 mm and 1.5 mm, inclusive.

According to a 22nd further embodiment, there is provided the air purifier according to the 21st further embodiment, wherein the thickness T is 0.8 mm.

According to a 23rd further embodiment, there is provided the air purifier according to the 21st or 22nd further embodiment, wherein the second wall (306) has a thickness measured perpendicular to a major surface of the second wall of T2 between 0.3 mm and 1.5 mm.

According to a 24th further embodiment, there is provided the air purifier according to claim 23, wherein the thickness T2 is 0.8 mm.

According to a 25th further embodiment, there is provided the air purifier according to anyone of the 20th-24th further embodiments, wherein the first wall (305) and the second wall (306) each has a thickness measured perpendicular to a major surface of the respective wall of T, between 0.3 mm and 1.5 mm.

According to a 26th further embodiment, there is provided the air purifier according to the 9th embodiment or according to anyone of the 10th-25th further embodiments provided that in combination with the 9th embodiment, wherein a/the first wall (305) and a/the second wall (306) form an angle in a range of 120 degrees and 30 degrees.

According to a 27th further embodiment, there is provided the air purifier according to the 26th further embodiment, wherein the angle is 78 degrees.

According to a 28th further embodiment, there is provided the air purifier according to the 11th or 12th further embodiment, wherein the perforations are circles.

According to a 29th further embodiment, there is provided the air purifier according to the 11th further embodiment, wherein the perforations are polygons.

According to a 30th further embodiment, there is provided the air purifier according to the 12th further embodiment, wherein the perforations are polygons.

According to a 31st further embodiment, there is provided the air purifier according to the 11th further embodiment, wherein the perforations are rectangles having a length H1 and a width W2.

According to a 32nd further embodiment, there is provided the air purifier according to the 12th further embodiment, wherein the perforations are rectangles having a length H1 and a width W2.

According to a 33rd further embodiment, there is provided the air purifier according to anyone of the 1st to 8th further embodiments, wherein the fire blocker includes a first wall (305) connected to a second wall (306), wherein the fire blocker has a V-shaped cross section in a plane perpendicular to the major axis of the fire blocker, and the first wall and the second wall form an angle A.

According to a 34th further embodiment, there is provided the air purifier according to 33rd further embodiment, wherein the angle A is between 30 degrees and 150 degrees.

According to a 35th further embodiment, there is provided the air purifier according to the 33rd or 34th further embodiment, wherein the angle A is 78 degrees.

According to a 36th further embodiment, there is provided the air purifier according to anyone of the 1st to 8th further embodiments, wherein the fire blocker (950) includes four walls meeting at an intersecting line, each of the four walls having a respective fire control region (310).

According to a 37th further embodiments, there is provided the air purifier according to the 36th further embodiment, wherein each fire control region (310) includes perforations.

According to a 38th further embodiment, there is provided the air purifier according to anyone of the 1st to 8th further embodiments, wherein the fire blocker (900) includes four walls connected in series such that a cross-section of the fire blocker has a W-shape, each of the four walls including a fire control region (310) with perforations.

According to a 39th further embodiment, there is provided the air purifier according to the 38th further embodiment, wherein the fire blocker (900) includes a raised tab (312) extending along a top of each end wall and along a central ridge of the W-shape.

According to a 40th further embodiment, there is provided the air purifier according to the 38th or 39th further embodiment, wherein the fire blocker (900) is formed of two V-shaped fire blockers (300) connected to each other along their respective tabs (312) extending along a top of one of their side walls.

According to a 41st further embodiment, there is provided the air purifier according to anyone of the 38th-40th further embodiments, wherein the fire blocker (910) includes two raised tabs, each extending along a top of each end wall of the W-shape.

According to a 42nd further embodiment, there is provided the air purifier according to the 41st further embodiment, wherein the fire blocker (910) is formed from a single piece of sheet metal that is bent, pressed, or shaped into the W-shape.

According to a 43rd further embodiment, there is provided the air purifier according to anyone of the 1st to 8th further embodiments, wherein the fire blocker (920) is formed of a single sheet of material bent into a U-shaped channel with at least one fire control region (310) along a majority of surface area of the fire blocker, with perforations formed in the fire control region.

According to a 44th further embodiment, there is provided the air purifier according to anyone of the 1st to 8th further embodiments, wherein the fire blocker (930) includes two U-shaped channels connected to each other, with each of the U-shaped channels having a fire control region with perforations.

According to a 45th further embodiment, there is provided the air purifier according to the 44th further embodiment, wherein the two U-shaped channels each open in a first direction.

According to a 46th further embodiment, there is provided the air purifier according to the 44th or 45th further embodiment, wherein the two U-shaped channels open in opposite directions, such that the fire blocker has a S-shaped cross-section.

According to a 47th further embodiment, there is provided the air purifier according to anyone of the 1st to 8th further embodiments, wherein the fire blocker (950) has an X-shaped cross-sectional shape.

According to a 48th further embodiment, there is provided the air purifier according to the 47th further embodiment, wherein the fire blocker (950) includes four walls, with each of the walls having a fire control region with perforations.

According to a 49th further embodiment, there is provided a method of preventing flames passing through a grease filter, the method comprising: providing a grease filter with baffle chambers that redirect incoming airflow toward ends of the baffle chambers; providing a fire blocker in a location that is downstream of the baffle chambers, the fire blocker effecting heat exchange with the airflow to prevent flames from passing beyond the fire blocker.

According to a 50th further embodiment, there is provided the method according to the 49th further embodiment, wherein the providing a fire blocker includes providing two fire blockers such that each of the two fire blockers is positioned at opposite ends of the baffle chambers.

According to a 51st further embodiment, there is provided the method according to the 50th further embodiment, wherein each fire blocker has two walls connected at an intersection, the two walls forming a V-shaped cross section, with an apex of the V-shape pointed toward the baffle chambers.

According to a 52nd further embodiment, there is provided the method according to the 51st further embodiment, wherein each of the two walls includes perforations that allow the airflow to pass.

According to a 53rd further embodiment, there is provided the method according to the 52nd further embodiment, wherein the perforations are holes formed perpendicular to the walls thereby creating flow channels through the walls, the flow channels having a first axis, and the airflow leaving the baffle chambers has a direction of flow that is offset from the first axis such that the airflow changes flow direction when it passes through the flow channels.

According to a 54th further embodiment, there is provided the method according to anyone of the 49th to 54th further embodiments, further comprising: operating an air moving mechanism to pull exhaust air into the grease filter; extracting grease from the exhaust air before the exhaust air enters the fire blocker; and flowing the exhaust air through the fire blocker.

According to a 55th further embodiment, there is provided a method of reducing fire penetration through a grease filter of an exhaust hood above a cooking appliance, the method comprising: removing a first grease filter which includes a housing (115, 116) enclosing a plurality of first baffle chambers (110), each first baffle chamber having an air inlet opening (111) that fluidly connects to a baffle cavity (112), the baffle opening and the baffle cavity extending along an entire length of the baffle chamber from an exhaust hood above the cooking appliance; and installing a second grease filter which includes a second housing (115, 116) enclosing a plurality of second baffle chambers (110), each second baffle chamber being shorter along its longest dimension than each of the first baffle chambers and having a second air inlet opening (111) that fluidly connects to a second baffle cavity (112), the second air inlet opening and the baffle cavity extending along an entire length of the second baffle chamber, the second baffle chamber terminating and having outlet openings (121) at two opposite sides of the housing; and at least one fire blocker (300) positioned at least at one side of the two opposite sides of the housing, such that exhaust air that has flowed into said each baffle chamber through its respective inlet opening flows out an outlet opening of said each baffle chamber and subsequently through the fire blocker before exiting the second grease filter into the exhaust hood.

## Claims

1. An air purifier (100) for an exhaust hood (1200), the air purifier comprising:

   a housing (115, 116) enclosing a plurality of baffle chambers (110), each baffle chamber having an air inlet opening (111) that fluidly connects to a baffle cavity (112), the air inlet opening and the baffle cavity extending along an entire length of the baffle chamber, the baffle chamber terminating and having outlet openings (121) at two opposite sides of the housing;
   at least one fire blocker (300) positioned at least at one side of the two opposite sides of the housing, such that exhaust air that has flowed into said each baffle chamber through its respective inlet opening flows out an outlet opening of said each baffle chamber and subsequently through the fire blocker (300) before exiting the air purifier into the exhaust hood (1200), wherein the inlet opening (111) of said each baffle chamber is positioned to co-operate with walls of the baffle chamber to direct air flow entering said each baffle chamber through the inlet opening (111) to proceed in a helical motion inside the baffle cavity (112) to said outlet opening (121) of the baffle chamber, such that said air flow is only in a direction substantially perpendicular to the direction in which said air flow enters through the inlet opening (111).

2. The air purifier according to claim 1, wherein the housing includes at least one cavity (118) at its end that is fluidly connected to the plurality of the baffle chambers.

3. The air purifier according to claim 2, wherein the fire blocker (300) is positioned in said at least one cavity (118).

4. The air purifier according to claim 2, wherein the housing includes two voids (118), each void of the two voids fluidly connected to the plurality of the baffle chambers, and the at least one fire blocker (300) includes two fire blockers (300), each of the fire blockers positioned in one of the two voids.

5. The air purifier according to claim 4, wherein

   each fire blocker (300) includes a fire control region (310) that allows at least partial flow of gas from one surface of the fire blocker (300) to an opposed surface of the fire blocker (300) in the fire control region and causes heat exchange the flow of gas and the fire control region (310), and
   each fire blocker (300) includes a first wall (305) connected to a second wall (306), wherein the fire blocker has a V-shaped cross section in a plane perpendicular to the major axis of the fire blocker.

6. The air purifier according to claim 5, wherein the fire control region includes a plurality of perforations that extend through the first wall and through the second wall in a direction that is perpendicular to a major surface of each of the first wall and the second wall.

7. The air purifier according to claim 6, wherein

   the perforations are circles having a diameter D, each circle having a horizontal distance from a closest adjacent circle of L and a vertical distance from a closest adjacent circle of H, the fire control region has a width W1 and a length L1,

a ratio of open area to closed area is given by $R=[N((pi)(D/2)^2)]/[W1 x L1]$, and R is between 33% and 50%, inclusive.

8. The air purifier according to claim 7, wherein the diameter of each circle, D, is between 2 mm and 10 mm.

9. The air purifier according to claim 3, wherein

   the fire blocker includes a first wall (305) connected to a second wall (306), wherein the fire blocker has a V-shaped cross section in a plane perpendicular to the major axis of the fire blocker, and
   the first wall and the second wall form an angle A.

10. The air purifier according to claim 3, wherein

   the fire blocker (950) includes four walls meeting at an intersecting line, each of the four walls having a respective fire control region (310), and each fire control region (310) includes perforations.

11. The air purifier according to claim 3, wherein the fire blocker (900) includes four walls connected in series such that a cross-section of the fire blocker has a W-shape, each of the four walls including a fire control region (310) with perforations.

12. The air purifier according to claim 3, wherein

   the fire blocker (920) is formed of a single sheet of material bent into a U-shaped channel with at least one fire control region (310) along a majority of surface area of the fire blocker, with perforations formed in the fire control region, or
   the fire blocker (930) includes two U-shaped channels connected to each other, with each of the U-shaped channels having a fire control region with perforations.

13. A method of preventing flames passing through a grease filter, the method comprising:

   providing a grease filter with baffle chambers that redirect incoming airflow toward ends of the baffle chambers;
   providing a fire blocker in a location that is downstream of the baffle chambers, the fire blocker effecting heat exchange with the airflow to prevent flames from passing beyond the fire blocker.

14. The method according to claim 13, wherein

   the providing a fire blocker includes providing two fire blockers such that each of the two fire blockers is positioned at opposite ends of the baffle chambers,
each fire blocker has two walls connected at an intersection, the two walls forming a V-shaped cross section, with an apex of the V-shape pointed toward the baffle chambers, and
each of the two walls includes perforations that allow the airflow to pass.

15. A method of reducing fire penetration through a grease filter of an exhaust hood above a cooking appliance, the method comprising:

removing a first grease filter which includes a housing (115, 116) enclosing a plurality of first baffle chambers (110), each first baffle chamber having an air inlet opening (111) that fluidly connects to a baffle cavity (112), the baffle opening and the baffle cavity extending along an entire length of the baffle chamber from an exhaust hood above the cooking appliance; and
installing a second grease filter which includes a second housing (115, 116) enclosing a plurality of second baffle chambers (110), each second baffle chamber being shorter along its longest dimension than each of the first baffle chambers and having a second air inlet opening (111) that fluidly connects to a second baffle cavity (112), the second air inlet opening and the baffle cavity extending along an entire length of the second baffle chamber, the second baffle chamber terminating and having outlet openings (121) at two opposite sides of the housing; and
at least one fire blocker (300) positioned at least at one side of the two opposite sides of the housing, such that exhaust air that has flowed into said each baffle chamber through its respective inlet opening flows out an outlet opening of said each baffle chamber and subsequently through the fire blocker before exiting the second grease filter into the exhaust hood.

**Fig. 1**

**Fig. 2A**

Fig. 2B

**Fig. 2C**

EP 4 397 378 A1

110   110      110                    110
      120
117   117                            117
120                    120                    120

112   112      112                    112

119   111  119  111  119          111
              111                    119
A

**Fig. 2D**

1200

1210

1205

100

**Fig. 12**

**Fig. 2E**

EP 4 397 378 A1

300

312

312

306

310

305

X

Y

Z

**Fig. 3**

312

310

**Fig. 4**

500

310

320

X

Y

**Fig. 5A**

x-x

320

A2

D

L

H

H1

W1

**Fig. 5B**

Fig. 5C

**Fig. 6**

**Fig. 7A**

**Fig. 7B**

**Fig. 8**

**Fig. 9A**

**Fig. 9B**

**Fig. 9C**

**Fig. 9D**

**Fig. 9E**

300

300

950

X

Y

Z

**Fig. 9F**

←D1→

T

**Fig. 10A**

←D2→

T

D3

**Fig. 10B**

←D4→

T

D5

**Fig. 10C**

**Fig. 10D**

**Fig. 11A**

**Fig. 11B**

**Fig. 11C**

Europäisches
Patentamt

European
Patent Office

Office européen
des brevets

# EUROPEAN SEARCH REPORT

Application Number

**EP 24 15 0211**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 4 872 892 A (VARTIAINEN SEPPO [FI] ET AL) 10 October 1989 (1989-10-10) | 1-4,13, 15 | INV.<br>A62C3/00 |
| A | * column 4, line 7 – line 59; figures * <br>----- | 5-12,14 | A62C4/04<br>F24C15/20 |
| A | US 2019/030382 A1 (ROUSSOS ANDREAS [CA]) 31 January 2019 (2019-01-31) <br>* paragraph [0007] – paragraph [0017]; figures *<br>----- | 1-15 | ADD.<br>B01D45/08 |

TECHNICAL FIELDS
SEARCHED      (IPC)

A62C
F24C

The present search report has been drawn up for all claims

| Place of search | Date of completion of the search | Examiner |
|---|---|---|
| The Hague | 10 April 2024 | Vervenne, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 0211

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2024

| Patent document cited in search report | | Publication date | Patent family member(s) | | Publication date |
|---|---|---|---|---|---|
| US 4872892 | A | 10-10-1989 | AT | E49131 T1 | 15-01-1990 |
| | | | CA | 1285499 C | 02-07-1991 |
| | | | DK | 502185 A | 31-10-1985 |
| | | | EP | 0172903 A1 | 05-03-1986 |
| | | | FI | 840978 A | 10-09-1985 |
| | | | NO | 165785 B | 02-01-1991 |
| | | | SU | 1426442 A3 | 23-09-1988 |
| | | | US | 4872892 A | 10-10-1989 |
| | | | WO | 8504114 A1 | 26-09-1985 |
| US 2019030382 | A1 | 31-01-2019 | CA | 3014500 A1 | 24-08-2017 |
| | | | US | 2019030382 A1 | 31-01-2019 |
| | | | WO | 2017139865 A1 | 24-08-2017 |

EPO FORM P0459

For more details about this annex : see Official Journal of the European Patent Office, No. 12/82

**EP 4 397 378 A1**

**Patent documents cited in the description**

- US 4872892 A